# FASCICULE DE BREVET EUROPEEN

(11) **EP 1 908 136 B1**
(45) Date de publication et mention de la délivrance du brevet: **29.05.2013**
(21) Numéro de dépôt: 06792503.2
(22) Date de dépôt: 13.07.2006
(51) Int. Cl.: H01M 2/06, H01M 2/20, H01M 2/02

(54) **BORNE DE LIAISON ELECTRIQUE POUR CELLULE DE STOCKAGE D'ENERGIE ELECTRIQUE**
ELEKTRISCHES AUSCHLUSSTERMINALS FÜR EINE ELEKTRISCHE STROMSPEICHERZELLE
ELECTRICAL CONNECTION TERMINAL FOR ELECTRIC POWER STORAGE CELL

(30) Priorité: 13.07.2005 FR 0507526
(43) Date de publication de la demande: 09.04.2008
(73) Titulaire: Batscap, 29500 Ergué-Gabéric (FR)
(72) Inventeur: NEDELEC, Luc, F-29460 L'Hopital Camfrout (FR)
(74) Mandataire: Regimbeau
(86) Numéro de dépôt international: PCT/EP2006/064223
(87) Numéro de publication internationale: WO 2007/006809

(56) Documents cités:
- EP-A- 0 854 525
- EP-A- 1 184 916
- EP-A- 1 193 779
- JP-A- 9 147 832
- US-A- 6 071 638
- US-A1- 2004 224 227

## Description

### Domaine de l'invention

L'invention concerne les ensembles de stockage d'énergie électrique. Elle s'applique, en particulier, mais non limitativement, aux batteries de type lithium polymère. Plus précisément, la présente invention concerne l'étanchéité et la connexion électrique de cellules de stockage d'énergie électrique formant un ensemble de stockage d'énergie électrique.

### Présentation de l'Art antérieur

Un nombre important d'ensembles de stockage d'énergie, dits de haute énergie, ont récemment été proposés, comme, par exemple, les ensembles lithium polymère.

Cependant, les dispositifs connus ne donnent pas totalement satisfaction quant à l'étanchéité des connexions de puissance de leurs cellules de stockage d'énergie électrique.

C'est un but que l'on a déjà cherché à atteindre dans de multiples réalisations, sans toutefois donner des résultats pleinement satisfaisants.

De manière conventionnelle, une cellule de stockage d'énergie électrique comprend un logement étanche où sont disposés différents éléments électrochimiques connectés par des moyens de liaison électrique et au moins une connectique électrique comportant deux bornes de liaison électrique de polarité opposée faisant saillir hors du logement.

Lors de l'assemblage d'une cellule de stockage d'énergie électrique, les bornes sont fixées au logement, à l'intérieur de la cellule, par des moyens boulonnés, des moyens de vissage ou par travail à froid du métal de leurs éléments constitutifs.

On citera également l'utilisation, pour renforcer l'étanchéité des bornes de liaison électrique et par conséquent, de la connexion électrique, de rondelles d'étanchéité ou encore de joints d'étanchéité toriques.

Or, à l'heure actuelle, ces réalisations ont comme point commun de faire pénétrer, en partie, les bornes de liaison électrique à l'intérieur du logement de la cellule de stockage d'énergie électrique pour les y fixer.

Cette fixation est complexe et la présence des bornes à l'intérieur de la cellule favorise leur exposition à l'environnement électrolyte des éléments électrochimiques posant, ainsi, des problèmes d'étanchéité.

Le document US 2004/0224227 décrit une structure de batterie comprenant un empilement de cathodes et d'anodes avec séparateurs intercolés placé dans une enveloppe étanche en materiau composite comportant une feuille d'alumunium, qui loge un electrolyte, et des moyens de connexion électrique sous forme de rivets qui traversent l'enveloppe et sont liés respectivement aux cathodes et aux anodes et associés à des moyens d'étanchéité. L'invention a notamment pour but de pallier les inconvénients de l'art antérieur.

Un but de la présente invention est de proposer une cellule de stockage d'énergie électrique offrant un système de connexion électrique étanche tout en présentant une connexion électrique précise, simple, sécurisée et fiable. Un autre but de la présente invention est de proposer une cellule de stockage d'énergie électrique offrant un système d'étanchéité, présentant une configuration simple et efficace.

Il est également désirable de proposer des bornes de liaison électrique qui offrent une économie en termes de coûts, de poids, d'espace dans la réalisation d'une cellule de stockage d'énergie électrique.

### Résumé de l'invention

Ces buts sont atteints, selon l'invention, grâce à une cellule de stockage d'énergie électrique telle que définie en revendication 1 annexée.

### Brève description des figures

L'invention sera mieux comprise et d'autres avantages et caractéristiques apparaîtront à la lecture de la description qui va suivre, donnée à titre d'exemple non limitatif, et grâce aux dessins annexés parmi lesquels:
- La figure 1 illustre une vue en perspective de l'assemblage d'une cellule de stockage d'énergie électrique selon l'invention;
- La figure 2 illustre une vue latérale d'un plot de liaison électrique d'une cellule de stockage d'énergie électrique selon l'invention;
- La figure 3 illustre une vue en perspective du dessous d'un plot de liaison électrique d'une cellule de stockage d'énergie électrique selon l'invention;
- La figure 4 illustre une vue en coupe partielle au niveau d'un plot de liaison électrique d'une cellule de stockage d'énergie électrique selon l'invention;
- La figure 5 illustre une vue de dessus de l'assemblage d'un goujon sur une platine d'une cellule de stockage d'énergie électrique;
- La figure 6 illustre une vue partielle en perspective de l'assemblage électrique, en série, de plots de liaison électrique de cellules de stockage d'énergie électrique via un dispositif de connexion de puissance;
- La figure 7 illustre une vue en perspective d'un plot de liaison électrique d'une cellule de stockage d'énergie électrique assemblé électriquement au dispositif de connexion de puissance;
- La figure 8 illustre un système d'interconnexion d'un ensemble de cellules de stockage d'énergie électrique avec un support de contrôle de son état de santé;
- La figure 9 illustre l'assemblage d'un plot de liaison électrique d'une cellule de stockage d'énergie électrique avec un système d'interconnexion de la figure 8.

### Description détaillée de l'invention

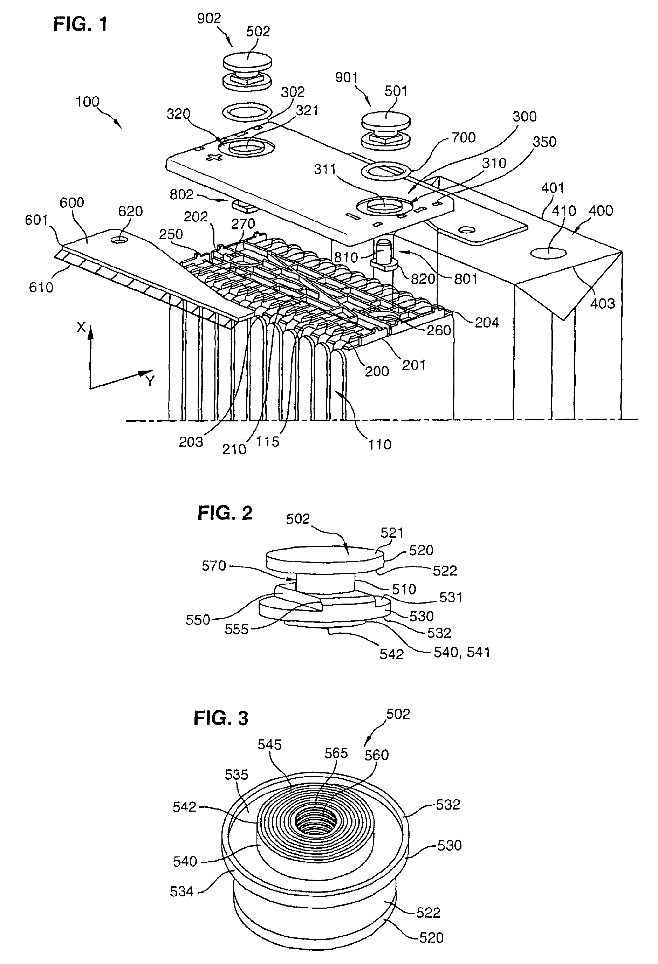

La figure 1 illustre les différents éléments formant une cellule 100 de stockage d'énergie électrique selon l'invention.

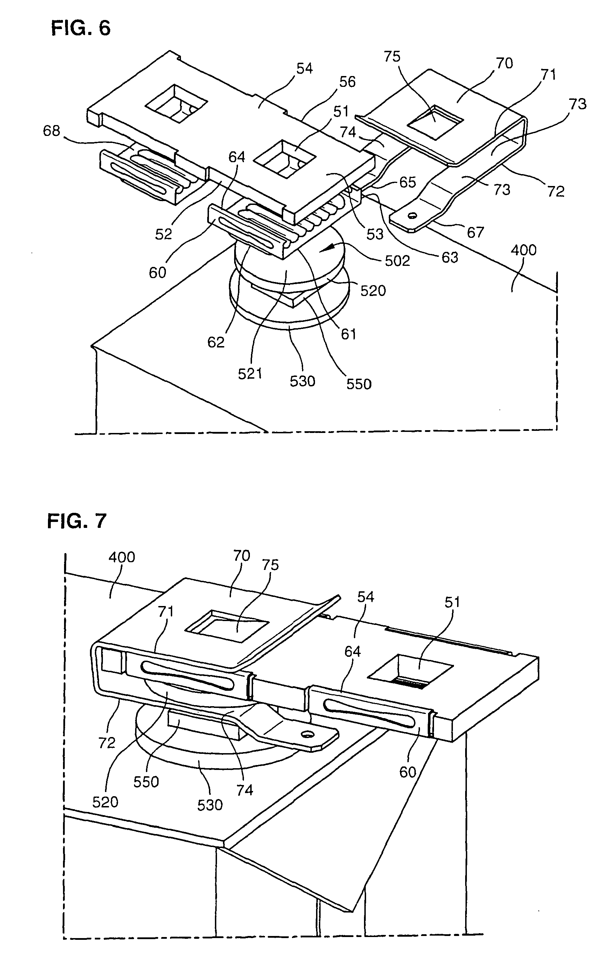

Une cellule 100 de stockage d'énergie électrique comprend une enveloppe 400, étanche, incluant deux passages 410 traversants, plusieurs éléments 110 électrochimiques placés à l'intérieur de l'enveloppe 400, des moyens de liaison électrique 600 desdits éléments électrochimiques 110, internes à l'enveloppe 400 et, des moyens de connexion électrique des élément 110 électrochimiques avec un dispositif de connexion de puissance extérieur à l'enveloppe 400, dispositif qui sera illustré par les figures 6 et 7.

Ces moyens de connexion électrique comprennent deux bornes de liaison électrique 901 et 902 disposées dans les passages de l'enveloppe 400 et, également, un ensemble de deux platines de forme rectangulaire, une platine inférieure 200 et une platine supérieure 300, disposées à l'intérieur de l'enveloppe 400.

Ces moyens vont permettre de traverser l'enveloppe sans en altérer l'étanchéité et sans lui transmettre d'efforts de maintien de la part des bornes de liaison électrique 901 et 902.

L'enveloppe 400 d'étanchéité se présente sous la forme d'une boite rectangulaire s'étendant sur la figure, en longueur suivant un axe X et en largeur, suivant un axe Y.

Ces deux passages 410 traversants sont circulaires et présents, respectivement, sur les deux extrémités opposées 402 et 403 de la face supérieure 401 de l'enveloppe 400, face perpendiculaire à l'axe X.

De préférence, l'enveloppe 400 d'étanchéité est souple et comporte une couche métallique barrière à l'humidité.

Elle loge un arrangement d'éléments 110 électrochimiques parallèles, de forme sensiblement rectangulaire, s'étendant longitudinalement selon l'axe X.

Les deux platines 200 et 300, de forme rectangulaire, ont une longueur et une largeur adaptées pour recouvrir la tranche supérieure de l'arrangement d'éléments 110 électrochimiques, perpendiculaire à l'axe X.

Préférentiellement, chacune d'elles est semi rigide et en plastique.

A l'intérieur de l'enveloppe 400, la platine inférieure 200 est placée au contact de la tranche d'éléments 110 électrochimiques tandis que la platine supérieure 300 est, elle, en contact avec l'enveloppe 400 d'étanchéité.

D'autre part, la platine inférieure 200 comprend un réseau de nervures 210 adaptés pour loger, chacune, une électrode du couple d'électrodes 115 d'un élément 110 électrochimique.

Ce réseau 210 s'étend le long des extrémités 203 et 204 longitudinales de la platine inférieure 200.

Les électrodes 115 sont ainsi placées, dans un plan perpendiculaire à l'axe X au contact de la platine inférieure 200.

Ces électrodes 115 sont connectées aux moyens de liaison électrique 600 et, plus précisément, à deux plaques de connexion 600 surmontant la platine inférieure 200.

Une plaque de connexion 600 est constituée par un concentrateur 600 d'énergie électrique.

Un seul concentrateur 600 est illustré sur la figure 1. Il présente une forme sensiblement triangulaire et s'étend, en longueur, perpendiculairement aux axes X et Y.

Il comporte une série de moyens individuels de connexion 610 juxtaposés, adaptés pour se connecter, chacun, avec une électrode 115 de même polarité d'un couple d'électrodes 115.

Ces moyens 610 sont disposés le long de l'extrémité longitudinale 601 du concentrateur 600, extrémité parallèle à l'extrémité 203 longitudinale de la platine inférieure 200.

Par ailleurs, la platine supérieure 300 présente, à proximité de ses extrémités 301 et 302, respectivement, deux perçages 311 et 321 circulaires.

Ces perçages 311 et 321 sont prolongés, sur la face supérieure de la platine supérieure 300 parallèle à l'axe X, respectivement par deux collerettes 310 et 320 circulaires.

Leur position va coïncider avec celles des deux passages traversants 410 de l'enveloppe 400 d'étanchéité.

De plus, le diamètre externe des passages 410 est sensiblement identique au diamètre interne des deux collerettes 310 et 320.

Les passages 410 traversants et les perçages 311 et 321 offrent une traversée, dans l'enveloppe 400 et dans la platine supérieure 300, à deux bornes 901 et 902 de liaison électrique, respectivement de polarité négative et positive.

Ces deux bornes 901 et 902 comportent, respectivement chacune, un goujon 801 et 802 et un plot 501 et 502 de liaison électrique. Les plots 501 et 502 de liaison électrique seront décrits plus loin en relation avec les figures 2 et 3.

Les deux perçages 311 et 312 circulaires de la platine supérieure 300 offrant un passage dans la platine 300, les plots 501 et 502 sont solidarisés, à l'intérieur de la cellule 100, aux deux concentrateurs 600 grâce à un vissage sur les goujons 801 et 802.

Chaque goujon 801 et 802 comprend un corps allongé 810 fileté, parallèle à l'axe X et un épaulement 820 annulaire centré sur le corps 810.

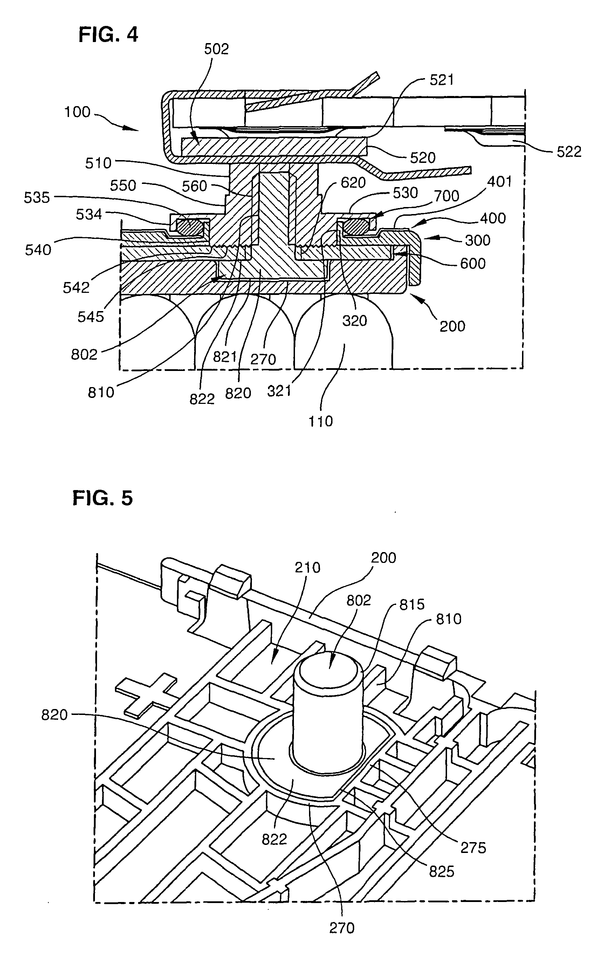

Chacun de ces goujons 801 et 802 est disposé dans un logement prévu à cet effet sur la platine inférieure 200 comme cela est décrit en relation avec la figure 5 pour le goujon 802.

Selon cette figure, on observe que ce dernier est associé à des moyens d'antirotation.

En effet, il vient se loger dans une forme complémentaire 270, comportant un méplat 275, ménagée sur la platine inférieure 200, par la face inférieure 821 de son épaulement 820 présentant, sur son profil circulaire, un méplat 825 identique.

En revenant à la figure 1, deux logements 260 et 270 pour les goujons 801 et 802 sont placés, respectivement, à chacune des extrémités 201 et 202 de la platine inférieure 200 de façon à coïncider avec les perçages circulaires 311 et 321 de la platine supérieure 300.

D'autre part, le goujon 801 ou 802 est monté flottant dans son logement 260, 270 et dans un perçage 620 de la plaque de connexion 600 pour permettre l'autocentrage du goujon par rapport à la borne.

Chacun des concentrateurs 600 est enfilé sur un des goujons 801 et 802 au travers d'une zone de perçage 620, circulaire, dont le diamètre interne est adapté à celui du corps allongé 810 des goujons 801 et 802 et, ensuite, il est encliqueté sur la platine inférieure 200.

D'autre part, cette dernière comprend, sur ces deux largeurs 201 et 202, une série de moyens d'encliquetage 250 aptes à coopérer avec des éléments de réception 350 présents, respectivement, sur les largeurs 301 et 302 de la platine supérieure 300 pour encliqueter la platine supérieure 300 sur la platine inférieure 200, enfermant ainsi les concentrateurs 600 et les épaulements annulaires 820 des goujons 801 et 802 précédemment cités.

Une variante de réalisation peut prévoir la présence des moyens d'encliquetage 250 sur la platine supérieure 300 et les moyens de réception 250 sur la platine inférieure 200.

Les corps allongés 610 des goujons 801 et 802 font, eux, saillie hors de la platine supérieure 300, vers l'extérieur, via les deux perçages 311 et 321.

Par ailleurs, les goujons 801 et 802 vont coopérer, de façon complémentaire, avec les deux plots 501 et 502 de liaison électrique décrits maintenant en relation avec les figures 2 et 3.

La figure 2 présente le plot 502 de liaison électrique configuré pour être fixé sur la cellule 100 de stockage d'énergie électrique, essentiellement à l'extérieur de l'enveloppe d'étanchéité 400.

Ce plot 502 dont le rôle est d'assurer la conduction électrique de l'intérieur d'une cellule 100 où est présent l'ensemble d'éléments électrochimiques 110 vers l'extérieur, comprend un arbre principal 510, cylindrique de révolution, s'étendant parallèlement à l'axe X.

Ce cylindre 510 se prolonge par deux épaulements annulaires 520 et 530, coaxiaux, de diamètre supérieur, un épaulement primaire 530 présent à l'extrémité proximale du cylindre 510, proche de la platine 200, et un épaulement secondaire 520 présent à l'extrémité distale du cylindre 510, éloignée de la platine 200.

Ils forment, par leurs faces internes 522 et 531, les branches d'une gorge annulaire 570.

D'autre part, à l'extrémité proximale du cylindre 510, l'épaulement primaire 530 est surmonté sur sa face interne 531 par une empreinte 550, coaxiale, qui va permettre le serrage du plot 502 de liaison électrique sur la cellule 100 de stockage d'énergie électrique.

Cette empreinte 550 comprend au moins un méplat et ses arêtes présentent un congé 555 définit par une surface qui converge vers l'épaulement primaire 530 lorsqu'on se déplace radialement vers l'extérieur.

Ce congé 555 va permettre de faciliter la prise d'un outil de serrage avec le plot de liaison électrique 500.

L'épaulement primaire 530 se prolonge également, sur sa face externe 532, par un second cylindre 540, coaxial, de diamètre inférieur, qui assure, en partie, la liaison électrique avec l'une des plaques de connexion 600.

Tel qu'illustré sur la figure 3, ce second cylindre 540 présente sur sa face externe 542, opposée à la face externe 532 de l'épaulement primaire 530, des annelures 545 concentriques, centrées sur l'arbre principal 510 jouant le rôle de moyens de connexion électrique conducteurs.

D'autre part, le plot 502 de liaison électrique est muni d'un passage 560 taraudé interne, de forme cylindrique. Il est coaxial avec l'arbre principal 510 et débouche vers l'extérieur sur la face externe 542 du cylindre 540.

Ce passage 560 est apte à recevoir et à s'engager avec le goujon 802 pour fixer la borne 902 de liaison électrique à l'ensemble de platines 200 et 300.

Par ailleurs, l'épaulement primaire 530 du plot 502 comprend, sur sa face externe 532, une gorge 535 annulaire, s'étendant sur toute sa circonférence, dont les parois sont formées par le cylindre 540 et par la paroi 534 externe de l'épaulement primaire 530.

Cette gorge 535 est configurée, en taille et en forme, pour recevoir un élément d'étanchéité 700.

De préférence, cet élément 700 est un joint torique d'étanchéité, de section circulaire.

La platine supérieure 300 comporte au moins une collerette 310, 320 formant avec la gorge 535 un logement de nature à comprimer le joint d'étanchéité 700 entre chacun des plots 501 et 502 et l'enveloppe 400 souple plaquée contre la surface supérieure de la platine supérieure 300.

Avantageusement, chaque collerette 310 et 320 de la platine supérieure 300 constitue également un séparateur électrique entre le bord de l'enveloppe 400 et le cylindre 540 des plots 501 et 502, assurant ainsi l'isolation électrique entre l'enveloppe 400 et ces derniers.

En revenant à la figure 1, on observe que les deux plots 501 et 502 tels que décrits ci-dessus en relation avec les figures 2 et 3 sont destinés à être placés sur la face supérieure 401 de l'enveloppe 400 d'étanchéité, leur arbre principal 510 s'étendant parallèlement à l'axe X.

Ils vont permettre aux bornes 901 et 902 de liaison électrique d'assurer des traversées électriques étanches au travers de l'enveloppe 400 d'étanchéité comme illustré sur la figure 4 par le plot 502.

Tel qu'illustré sur la figure, le cylindre 540 du plot de liaison électrique 502 est inséré dans le perçage 321 de la platine supérieure 300 jusqu'à ce que les annelures concentriques 545 viennent en butée du concentrateur 600.

Le cylindre 540 du plot 502 est centré sur le corps allongé 810 fileté au goujon 802, goujon 802 faisant saillie hors de l'enveloppe 400 via un passage traversant 410 centré autour de la collerette 320 de la platine supérieure 300.

De préférence, la mise en place du concentrateur 600 autour du corps allongé 810 du goujon 802 est facilitée par la présence d'un chanfrein 815 sur l'extrémité du corps 810 du goujon 802 opposée à l'épaulement annulaire 820.

Ce chanfrein 815 est défini par une surface qui converge vers l'épaulement 820 lorsqu'on se déplace radialement vers l'extérieur.

Le goujon 802 étant engagé au cylindre 540 du plot 502, les annelures 545 présentes sur la surface interne 542 du cylindre 540 entrent en contact avec le concentrateur 600 et créent des zones importantes de compression lors du serrage de la borne, favorisant ainsi la qualité du contact électrique.

Avantageusement, chaque borne 901 et 902 de liaison électrique réalise une connexion électrique directe avec un concentrateur 600 au travers d'un passage 410 de l'enveloppe 400 d'étanchéité de la cellule 100 de stockage d'énergie.

D'autre part, deux éléments d'étanchéité élastomères 700 sont placés sur l'enveloppe 400, chacun autour d'une collerette 310 et 320 de la platine supérieure 300 faisant saillie hors de l'enveloppe 400 d'étanchéité.

En engageant le plot 502 de liaison électrique avec le goujon 802 via son passage taraudé 565, chacun des éléments d'étanchéité 700 est piégé dans une gorge fermée dont les branches sont formées d'une part par la gorge annulaire 535 de l'épaulement inférieur 530 du plot 502 et, d'autre part, par la collerette 320 de la platine supérieure 300.

Avantageusement, les plots 501 et 502 assurent, ainsi, un rôle de cloches d'étanchéité au dessus des passages 410 traversants de l'enveloppe 400 d'étanchéité.

Selon l'invention, au serrage du plot 502 via l'empreinte de serrage 550 permettant l'utilisation d'une clef à fourche dynamométrique, on vient établir, non seulement, le contact électrique du plot 502 sur le concentrateur 600 mais aussi le pincement de l'élément d'étanchéité 700 sur l'enveloppe 400 dans la gorge fermée.

Avantageusement, dans une même opération de serrage, une pression de serrage adaptée peut garantir le contact électrique concentrateur 600/plot 502 et la bonne cote de pincement du joint 700 dans la gorge 535 pour assurer l'étanchéité de la jonction plot 502/enveloppe 400.

Cette réalisation permet d'éviter le contact électrique direct entre les deux plots 501 et 502 d'une cellule 100 par l'intermédiaire de la tranche de l'enveloppe 400 souple conductrice.

En effet, les collerettes 310 et 320 permettant de séparer, électriquement, chaque plot 501 et 502 de la cellule 100 et la tranche de l'enveloppe 400, évitent une mise en court circuit de la cellule 100.

Avantageusement, les bornes 901 et 902 de liaison électrique ne débouchent pas à l'intérieur de la cellule 100. Elles réalisent une traversée électrique étanche au niveau des passages traversants 410 de traversée électrique étanche au niveau des passages traversants 410 de l'enveloppe 400 d'étanchéité.

Sur la figure 4, on observe également un exemple de dispositif de connexion de puissance utilisé pour connecter électriquement plusieurs cellules 100 de stockage d'énergie électrique.

Ce système va maintenant être décrit en relation avec les figures 6 et 7.

Ce système comprend une pièce électroconductrice 54 ainsi que deux organes ressorts 70 pour raccorder en série deux plots 500 et 502 de liaison électrique d'un couple de cellules 100 de stockage d'énergie électrique.

Tel qu'illustré sur la figure 6, le plot 502 de liaison électrique de la cellule 100 est lié avec un plot 500 de liaison électrique de la cellule voisine (non illustré) par un barreau 54 de forme sensiblement rectangulaire.

Une extrémité 53 du barreau 54 est disposée perpendiculairement à l'arbre 510 du plot 502 de liaison électrique, sur la face externe 521 de l'épaulement primaire 520.

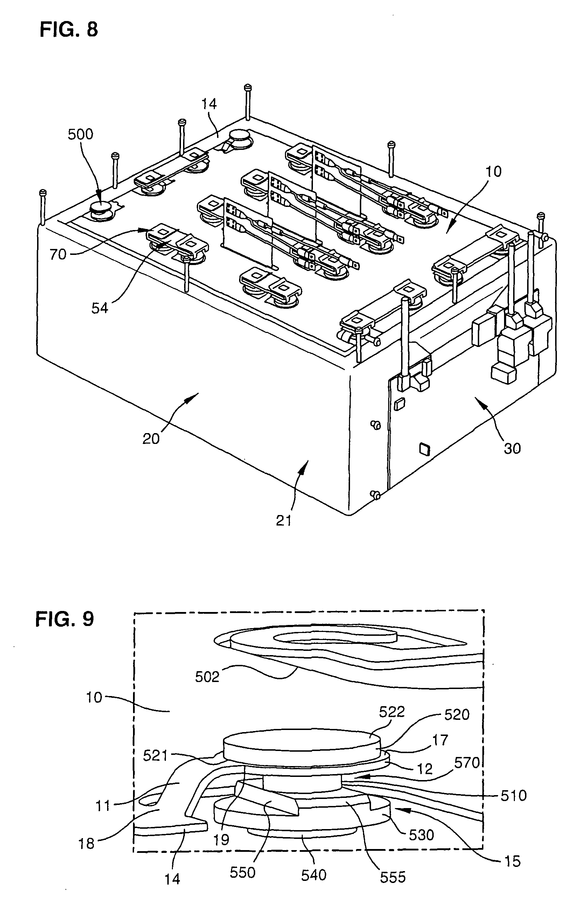

A cette extrémité 53, le barreau 54 présente une découpe carrée 51, centrée sur l'arbre 510 du plot 502 de liaison électrique, qui va servir de repère pour la mise en place d'un organe ressort 70 assurant, d'une part, la prise de contact plot 502 de liaison électrique /barreau 54 et d'autre part la prise de contact plot 502 de liaison électrique /système d'interconnexion 10 comme cela sera décrit en relation avec la figure 8.

Ce barreau 54 présente également, à cette extrémité 53, de part et d'autre de la découpe carrée 51, deux évidements 52 et 56 s'étendant de chaque coté longitudinal du barreau 54.

La longueur des évidements 52 et 56 opposés est identique et correspond sensiblement au diamètre externe du plot 502 de liaison électrique.

Ces évidements 52 et 56 vont permettre à une pièce de contact 60, jouant le rôle de contact entre le plot 502 de liaison électrique et le barreau 54, de venir en prise avec ce dernier.

Elle se présente comme une plaque rectangulaire 61 de section transversale en forme de U, disposée parallèlement à l'arbre 510.

La longueur de la plaque 61 est adaptée pour que celle-ci vienne au contact, respectivement, des évidements 52 et 56 du barreau 54 et s'encliquette au barreau 54.

L'encliquetage est réalisé par pliage en retour des extrémités 64 et 65 de la plaque 61 sur la face supérieure du barreau 54.

Sur la face supérieure 67 qui va se présenter au contact de la face inférieure du barreau 54, la plaque 61 présente une série de lamelles 68 métalliques adjacentes formant cannelures rectilignes.

De préférence, le barreau 54 est en cuivre étamé et la pièce de contact 60 en cuivre béryllium.

D'autre part, l'organe ressort 70 est lui constitué par une pince 70.

Cette pince 70 assure la mise en contact de l'empilement épaulement primaire 520 du plot 502 de liaison électrique /pièce de contact 60/barreau 54 en venant en prise avec cet ensemble par coulissement latéral perpendiculairement à l'arbre 510 du plot 502. Elle se présente comme une pièce à section transversale en forme de U comprenant une plaque 71 et une contre-plaque 72 reliées par un élément de liaison 73 et assemblées, respectivement, avec la face supérieure du barreau 54 et la face interne 522 de l'épaulement primaire 520 du plot 502.

La contre-plaque 72 de la pince 70 se divise, sur sa longueur, en deux pattes 73 et 74 identiques se plaçant autour de l'arbre 510 du plot 502.

D'autre part, l'organe ressort 70 présente, sur la plaque 71, un ergot de verrouillage 75, carré, qui permet de verrouiller la pince 70 sur le montage. Cet ergot 75 vient se placer, lors du coulissement, dans la découpe 51 carrée du barreau 54 et permet d'éviter que la pince 70 ne se déloge du plot 500 de liaison électrique sous des contraintes mécaniques subies par la cellule 100 de stockage d'énergie électrique.

L'utilisation de la pince 70 permet d'appliquer des forces de compression continuelles aux cellules 100 de stockage d'énergie électrique.

Le système de connexion de puissance entre plusieurs cellules 100 de stockage d'énergie électrique peut faire l'objet de nombreuses variantes de réalisation. Celle ci ne doit pas être limitée à l'illustration faite sur les figures 6 et 7 précédentes.

Par ailleurs, chaque plot 501 et 502 de liaison électrique d'une cellule 100 de stockage d'énergie électrique selon l'invention est, également, adapté pour permettre de connecter la cellule 100 à un support de contrôle 30, par l'intermédiaire d'un système d'interconnexion 10 tel qu'illustré sur la figure 8.

La figure 8 illustre un ensemble de stockage d'énergie électrique 20 formé d'un arrangement de plusieurs cellules 100 de stockage d'énergie électriques, individuelles, disposées dans la concavité d'une boîte rectangulaire formant un logement hermétique 21.

Le système d'interconnexion 10 est placé à plat sur la face supérieure du logement 21 de manière à couvrir les sommets des cellules 100 de stockage d'énergie électrique présentant, chacune, deux plots 500 de liaison électrique, de polarité différente.

Ce système 10, flexible, présente, avantageusement, un circuit de dérivation comprenant des résistances de dissipation d'énergie ainsi qu'un circuit de mesure de tension pour chacune des cellules 100 auquel il est connecté.

Tel qu'illustré sur la figure 9, il comprend, également, des découpes destinées à le fixer aux plots 500 des cellules 100 de stockage d'énergie électrique.

Si on considère un exemple de découpe 15 du système d'interconnexion 10, elle présente une bretelle 11 d'interconnexion droite se prolongeant à une extrémité 19 par un oeillet 12 de connexion et reliant à l'autre extrémité 18 le support d'interconnexion 10. Cet oeillet 12 est en forme d'arc de cercle dont l'angle d'ouverture (non représenté) se présente vers la concavité de la découpe 15.

L'oeillet d'interconnexion 12 de la découpe 15 vient se glisser, latéralement, dans la gorge 570 formée par les deux épaulements 520 et 530 du plot 502 de la cellule 100 selon l'invention.

Plus précisément, l'angle d'ouverture de l'oeillet 12 s'engage, de manière complémentaire, autour de l'arbre 510, au niveau de la gorge 570 précitée pour permettre à la surface supérieure 17 de l'oeillet 12 d'entrer en contact avec la partie inférieure 521 de l'épaulement primaire 520 du plot 502 de liaison électrique.

L'angle d'ouverture de l'oeillet 12 est adapté pour coincer l'oeillet 12 en position sur l'arbre 510.

Or, il existe une différence de hauteur entre la partie inférieure 521 de l'épaulement primaire 520 du plot 502 de liaison électrique et la surface supérieure 17 de l'oeillet d'interconnexion 12 du support d'interconnexion 10.

Afin de les mettre en contact, la différence d'altitude est compensée grâce à la bretelle d'interconnexion 11 qui se déforme par torsion. La longueur de la bretelle 11 va permettre de gérer une différence d'altitude entre l'oeillet 12 et le support 10 tout en autorisant l'alignement de l'oeillet 12 avec le plot 500 de liaison électrique.

L'organe ressort 70 décrit en relation avec les figures 6 et 7 assure également la prise de contact électrique plot 502 de liaison électrique /oeillet d'interconnexion 12.

L'homme de l'art appréciera une cellule 100 de stockage d'énergie électrique offrant un système de connexion électrique au travers d'une enveloppe d'étanchéité 400 tout en proposant une connexion électrique précise.

De plus, cette cellule 100 de stockage d'énergie électrique offre l'avantage de présenter un système d'étanchéité, simple et efficace.

Enfin, une cellule 100 de stockage d'énergie électrique, selon l'invention, propose des systèmes d'étanchéité et de connexion électrique qui, par rapport aux dispositifs connus de l'état de l'art, peuvent être utilisés de manière fiable pour tout ensemble de stockage de haute énergie électrique. On peut citer, comme exemples non limitatifs, les ensembles lithium-polymère, Nickel Métal Hydrure ou encore lithium-ion.

Bien entendu la présente invention n'est pas limitée aux modes de réalisation particuliers qui viennent d'être décrits. En particulier, la présente invention n'est pas limitée aux dessins annexés. Les références spécifiques illustrées dans les paragraphes précédents sont des exemples non limitatifs de l'invention.

## Revendications

1. Cellule (100) de stockage d'énergie électrique comprenant plusieurs éléments (110) électrochimiques reliés en série et/ou en parallèle, disposés à l'intérieur d'une enveloppe (400) étanche, et des moyens de liaison électrique (600) desdits éléments électrochimiques, internes à l'enveloppe (400), la dite enveloppe (400) comprenant des moyens de connexion électrique des élements (110) électrochimiques avec un dispositif de connexion de puissance extérieur à l'enveloppe (400), lesdits moyens de connexion électrique comportant deux bornes de liaison électrique (901, 902) disposées dans deux passages (410) traversants de l'enveloppe (400), les moyens de connexion électrique comportant des moyens (501, 502, 801, 802, 200, 300) agencés de sorte à traverser la dite enveloppe (400) sans en altérer l'étanchéité et sans lui transmettre d'efforts de maintien,
l'enveloppe (400) d'étanchéité étant souple et comportant une couche métallique barrière à l'humidité,
**caractérisée en ce que** les moyens de liaison électrique (600) comprennent deux plaques de connexion (600) respectivement associées aux deux bornes de liaison électrique (901, 902), lesdites bornes (901, 902) comprenant chacune un plot (501, 502) de liaison électrique et un goujon (801, 802), les deux goujons (801, 802), associés à des moyens d'anti-rotation (200, 260, 270) de goujon, venant solidariser les deux plaques de connexion (600) respectivement aux deux plots (501, 502) de liaison électrique grâce à des moyens de serrage (550), lesdits moyens de serrage (550) assurant également l'étanchéité avec le pincement de deux joints d'étanchéité (700), intercalés, chacun entre un épaulement d'un plot (501, 502) et l'enveloppe (400) d'étanchéité, et
**en ce que** au moins une des bornes (901, 902) comporte des moyens d'isolation aptes à l'isoler électriquement de l'enveloppe (400).

2. Cellule selon la revendication 1 **caractérisée en ce que** chaque plaque de connexion (600) est intercalée entre un des goujons (801, 802) et un des plots (501, 502) de liaison électrique.

3. Cellule selon l'une des revendications 1 et 2 **caractérisée en ce que** chacune desdites plaques de connexion (600) est agencée d'une part, sur le goujon (801, 802) auquel elle est associée, ledit goujon (801, 802) faisant saillie hors d'un passage (410) traversant de l'enveloppe (400) pour s'engager, de façon complémentaire, avec un passage taraudé (560) du plot (501, 502) de liaison électrique et, d'autre part, en contact direct avec des moyens de connexion électrique conducteurs (545) du plot (501, 502).

4. Cellule selon l'une des revendications 1 à 3 **caractérisée en ce que**, pour un goujon (801, 802), les moyens d'anti-rotation (200, 260, 270) comprennent une platine inférieure (200) présentant un logement (260, 270) dont la forme complémentaire à un épaulement (820) du goujon (801, 802) comporte un méplat (275).

5. Cellule selon la revendication précédente **caractérisée en ce que** chaque goujon (801, 802) est monté flottant dans son logement (260, 270) et dans un perçage (620) de la plaque de connexion (600) pour permettre l'autocentrage du goujon par rapport à la borne (901, 902).

6. Cellule selon l'une des revendications 1 à 5 **caractérisée en ce que** les plaques de connexion (600) sont deux concentrateurs (600) d'énergie électrique, à chacun desquels sont associés des moyens individuels de connexion (610) aptes à se connecter à des électrodes (115) inclues dans les éléments (110) électrochimiques et, un perçage (620) permettant son enfilement sur un corps (810) du goujon (801, 802) auquel il est associé.

7. Cellule selon l'une des revendications 1 à 6 **caractérisée en ce que** elle comprend, en outre, à l'intérieur de l'enveloppe (400) d'étanchéité, une platine supérieure (300), comportant deux perçages (311, 321) circulaires permettant, chacun, le passage d'un corps (810) de goujon (801, 802), cette platine supérieure (300) incluant des éléments de réception (350) coopérant avec des moyens d'encliquetage (250) de la platine inférieure (200), verrouillant ainsi les plaques de connexion (600) et les épaulements (820) des goujons (800).

8. Cellule selon la revendication précédente, **caractérisée en ce que** chaque plot (501,502) comporte une gorge (535) et la platine supérieure (300) comporte au moins une collerette (310, 320), lesdites gorge et collerette formant un logement de nature à comprimer un joint d'étanchéité (700) entre chaque plot (501,502) et l'enveloppe (400) d'étanchéité plaquée contre la platine supérieure (300).

9. Cellule selon la revendication précédente **caractérisée en ce que** chaque collerette (310, 320) de la platine supérieure (300) constitue un séparateur électrique entre l'enveloppe (400) et chaque plot (501, 502), assurant ainsi l'isolation électrique entre les deux.

10. Cellule selon la revendication 8 **caractérisée en ce que** les joints d'étanchéité (700) sont des joints toriques.

11. Cellule selon l'une des revendications 1 à 10 **caractérisée en ce que** chaque plot (501, 502) de liaison électrique présente comme moyens de connexion conducteurs (545) une surface plane incluant des cannelures (545), aptes à favoriser lors du serrage le contact électrique entre les plaques de connexion (600) et les plots (501, 502).

12. Cellule selon l'une des revendications 1 à 11 **caractérisée en ce que** les plots (501, 502) de liaison électrique sont aptes à être connectés avec une nappe d'interconnexion (10) électrique, flexible, reliant la cellule (100) à un support électronique de contrôle (30) de son état de santé.

13. Cellule selon l'une des revendications 1 à 12 caractérisée en ce chaque plot (501, 502) de liaison électrique comprend, en outre, un épaulement primaire (520) apte à s'assembler avec le dispositif de connexion de puissance et plus précisément avec une pièce de connexion électroconductrice (54) et des organes ressorts (70) en vue de se connecter à une borne (901, 902) d'une cellule (100) juxtaposée, une pièce intermédiaire de contact (60) étant interposée entre la pièce de connexion électroconductrice (54) et la borne (901, 902) pour favoriser le contact électrique entre lesdites pièces.

## Patentansprüche

1. Zelle (100) zum Speichern von elektrischer Energie, umfassend mehrere elektrochemische Elemente (110), die in Reihe und/oder parallel verbunden sind und die im Inneren einer dichten Umhüllung (400) angeordnet sind, und Mittel zum elektrischen Verbinden (600) der elektrochemischen Elemente (110) innerhalb der Umhüllung (400), wobei die Umhüllung (400) Mittel zum elektrischen Verbinden der elektrochemischen Elemente (110) mit einer Leistungsverbindungsvorrichtung außerhalb der Umhüllung (400) umfasst, wobei die elektrischen Verbindungsmittel zwei elektrische Anschlussklemmen (901, 902) umfassen, die in zwei durchgehenden Durchführungen (410) der Umhüllung (400) angeordnet sind, wobei die elektrischen Verbindungsmittel Mittel (501, 502, 801, 802, 200, 300) umfassen, die so angeordnet sind, dass sie die Umhüllung (400) durchqueren, ohne deren Dichtigkeit zu beeinträchtigen und ohne Haltekräfte auf diese zu übertragen, wobei die Dichtungsumhüllung (400) flexibel ist und eine metallische Feuchtigkeitssperrschicht aufweist,
**dadurch gekennzeichnet, dass** die elektrischen Verbindungsmittel (600) zwei Anschlussplatten (600) umfassen, die jeweils den zwei elektrischen Anschlussklemmen (901, 902) zugeordnet sind, wobei die Klemmen (901, 902) jeweils ein elektrisches Bondpad (501, 502) und einen Stift (801, 802) umfassen, wobei die zwei Stifte (801, 802), denen Stift-Drehsicherungsmittel (200, 260, 270) zugeordnet sind, die zwei Anschlussplatten (600) mit Hilfe von Klemmmitteln (550) jeweils mit den zwei elektrischen Bondpads (501, 502) in Verbindung bringen, wobei die Klemmmittel (550) auch die Dichtigkeit mit dem Einklemmen von zwei Dichtungen (700) bewirken, die jeweils zwischen einem Absatz eines Pads (501, 502) und der Dichtungsumhüllung (400) eingesetzt sind, und dass zumindest eine der Klemmen (901, 902) Isoliermittel umfasst, die dafür geeignet sind, die Umhüllung (400) elektrisch zu isolieren.

2. Zelle nach Anspruch 1, **dadurch gekennzeichnet, dass** jede Anschlussplatte (600) zwischen einem der Stifte (801, 802) und einem der elektrischen Bondpads (501, 502) eingesetzt ist.

3. Zelle nach einem der Ansprüche 1 und 2, **dadurch gekennzeichnet, dass** jede der Anschlussplatten (600) einerseits an dem Stift (801, 802), dem sie zugeordnet ist, angeordnet ist, wobei der Stift (801, 802) aus einer durchgehenden Durchführung (410) der Umhüllung (400) auskragt, um auf komplementäre Weise mit einer Gewindedurchführung (560) des elektrischen Bondpads (501, 502) in Eingriff zu kommen, und andererseits in direktem Kontakt mit leitfähigen elektrischen Verbindungsmitteln (545) des Pads (501, 502) angeordnet ist.

4. Zelle nach einem der Ansprüche 1 bis 3, **dadurch gekennzeichnet, dass** die Drehsicherungsmittel (200, 260, 270) für einen Stift (801, 802) eine untere Platte (200) umfassen, die einen Sitz (260, 270) aufweist, dessen zu einem Absatz (820) des Stifts (801, 802) komplementäre Form eine Abflachung (275) aufweist.

5. Zelle nach dem vorhergehenden Anspruch, **dadurch gekennzeichnet, dass** jeder Stift (801, 802) in seinem Sitz (260, 270) und in einer Bohrung (620) der Anschlussplatte (600) schwimmend montiert ist, um die Selbstzentrierung des Stifts relativ zu der Klemme (901, 902) zu ermöglichen.

6. Zelle nach einem der Ansprüche 1 bis 5, **dadurch gekennzeichnet, dass** die Anschlussplatten (600) zwei Konzentratoren (600) elektrischer Energie sind, wobei jedem von ihnen einzelne Anschlussmittel (610) zugeordnet sind, die an Elektroden (115) anschließbar sind, die in den elektrochemischen Elementen (110) enthalten sind, und jedem von ihnen eine Bohrung (620) zugeordnet ist, die dessen Aufstecken auf einen Körper (810) des Stifts (801, 802), dem er zugeordnet ist, ermöglicht.

7. Zelle nach einem der Ansprüche 1 bis 6, **dadurch gekennzeichnet, dass** sie ferner im Inneren der Dichtungsumhüllung (400) eine obere Platte (300) mit zwei kreisförmigen Bohrungen (311, 321) umfasst, die jeweils den Durchlass eines Körpers (810) des Stifts (801, 802) ermöglichen, wobei diese obere Platte (300) Aufnahmeelemente (350) einschließt, die mit Einrastmitteln (250) der unteren Platte (200) zusammenwirken, wodurch sie die Anschlussplatten (600) und die Absätze (820) der Stifte (800) verriegeln.

8. Zelle nach dem vorhergehenden Anspruch, **dadurch gekennzeichnet, dass** jedes Pad (501, 502) eine Rille (535) aufweist und die obere Platte (300) mindestens einen Bund (310, 320) aufweist, wobei die Rille und der Bund einen Sitz bilden, dergestalt, dass eine Dichtung (700) zwischen jedem Pad (501, 502) und der Dichtungsumhüllung (400), die gegen die obere Platte (300) gedrückt wird, zusammengepresst wird.

9. Zelle nach dem vorhergehenden Anspruch, **dadurch gekennzeichnet, dass** jeder Bund (310, 320) der oberen Platte (300) einen elektrischen Separator zwischen der Umhüllung (400) und jedem Pad (501, 502) bildet, so dass er die elektrische Isolierung zwischen den beiden bewirkt.

10. Zelle nach Anspruch 8, **dadurch gekennzeichnet, dass** die Dichtungen (700) O-Ringe sind.

11. Zelle nach einem der Ansprüche 1 bis 10, **dadurch gekennzeichnet, dass** jedes elektrische Bondpad (501, 502) als leitfähige elektrische Verbindungsmittel (545) eine ebene Fläche mit Rillen (545) aufweist, die dafür geeignet sind, beim Klemmen den elektrischen Kontakt zwischen den Anschlussplatten (600) und den Pads (501, 502) zu begünstigen.

12. Zelle nach einem der Ansprüche 1 bis 11, **dadurch gekennzeichnet, dass** die elektrischen Bondpads (501, 502) für die Verbindung mit einer flexiblen elektrischen Verbindungsmatte (10) geeignet sind, welche die Zelle (100) mit einem elektronischen Träger (30) zur Kontrolle ihres Gebrauchstüchtigkeitszustands verbindet.

13. Zelle nach einem der Ansprüche 1 bis 12, **dadurch gekennzeichnet, dass** jedes elektrische Bondpad (501, 502) ferner einen primären Absatz (520) umfasst, der für die Verbindung mit der Leistungsanschlussvorrichtung und insbesondere mit einem elektrisch leitfähigen Anschlussstück (54) und Federorganen (70) geeignet ist, um an eine Klemme (901, 902) einer daneben angeordneten Zelle (100) angeschlossen zu werden, wobei ein Zwischenkontaktstück (60) zwischen dem elektrisch leitfähigen Anschlussstück (54) und der Klemme (901, 902) eingesetzt ist, um den elektrischen Kontakt zwischen den Teilen zu begünstigen.

## Claims

1. A cell (100) for the storage of electrical energy that includes several electrochemical elements (110) connected in series and/or in parallel and placed inside a sealed envelope (400), and means for the electrical connection (600) of said electrochemical elements inside the envelope (400), where said envelope (400) includes means for electrical connection of the electrochemical elements (110) to a power connecting device outside of the envelope (400), said electrical connecting means include electrical connecting terminals (901, 902) placed in two passages (410) passing through the envelope (400), the electrical connecting means including means (501, 502, 801, 802, 200, 300) arranged in order to allow passage through said envelope (400) without affecting the seal and without the transmission of support stresses, the sealing envelope (400) being flexible and including a metal layer forming a waterproof barrier, **characterised in that** the electrical connecting means (600) include two connecting plates (600) respectively associated with the electrical connecting terminals (901, 902), with said terminals (901, 902), each including an electrical connection contact stud (501, 502) and a pin (801, 802), where the two pins (801, 802), together with means to prevent rotation (200, 260, 270) of the pin, are used to secure the two connecting plates (600) respectively to the two electrical connection contact studs (501, 502) by means of the clamping means (550), where said clamping means (550) also effects the sealing by the clamping of two sealing gaskets(700), each inserted between a shoulder on a contact stud (501, 502) and the sealing envelope (400), and **in that** at least one of the terminals (901, 902) includes the means of isolation that are designed to insulate it electrically from the envelope (400).

2. The cell according to claim 1, **characterised in that** each connecting plate (600) is inserted between one of the pins (801, 802) and one of the electrical connection contact studs (501, 502).

3. The cell according to one of claims 1 and 2, **characterised in that** each of said connecting plates (600) is arranged firstly on the pin (801, 802) with which it is associated, with said pin (801, 802) projecting outside a passage (410) passing through the envelope (400) so as to engage, in a complementary manner, with a threaded passage (560) of the electrical connection contact stud (501, 502) and also in direct contact with conducting electrical connectors (545) of the contact stud (501, 502)

4. The cell according to one of claims 1 to 3, **characterised in that**, for a pin (801, 802), the means to prevent rotation (200, 260, 270) include a bottom plate (200) that includes a casing (260, 270) whose complementary shape to a shoulder (820) of the pin (801, 802) includes a flat spot (275).

5. The cell according to the preceding claim, **characterised in that** each pin (801, 802) is mounted to float in its casing (260, 270) and in a hole (620) of the connecting plate (600), in order to allow the self-centring of the pin in relation to the terminal (901, 902).

6. The cell according to one of claims 1 to 5, **characterised in that** the connecting plates (600) are two concentrators (600) of electrical energy, with each of which are associated individual connection means (610) that are designed to connect to electrodes (115) that are included in the electrochemical elements (110) and a hole (620) allowing it to be threaded onto a body (810) of the pin (801, 802) with which it is associated.

7. The cell according to one of claims 1 to 6, **characterised in that** it also includes, inside the sealing envelope (400), a top plate (300) with two circular holes (311, 321), each allowing passage of the body (810) of a pin (801, 802), with this top plate (300) including reception elements (350) that mate with click-on fittings (250) on the bottom plate (200), thus locking the connecting plates (600) and the shoulders (820) of the pins (800).

8. The cell according to the preceding claim, **characterised in that** each contact stud (501, 502) includes a channel (535), and the top plate (300) includes at least one small collar (310, 320), with said channel and small collar forming a casing of such a nature as to compress a sealing o-ring (700) between each contact stud (501, 502) and the sealing envelope (400) flattened against the top plate (300).

9. A cell according to the preceding claim, **characterised in that** each small collar (310, 320) of the top plate (300) constitutes an electrical separator between the envelope (400) and each contact stud (501, 502), thus providing the electrical insulation between the two.

10. The cell according to claim 8, **characterised in that** the sealing gaskets (700) are o-rings.

11. The cell according to one of claims 1 to 10, **characterised in that** each electrical connection contact stud (501, 502) has, as a means of conductor (545) connection, a flat surface that includes bands (545) that are designed, when clamped, to favour the electrical contact between the connecting plates (600) and the contact studs (501, 502).

12. The cell according to one of claims 1 to 11, **characterised in that** the electrical connection contact studs (501, 502) are designed to be connected to a flexible interconnection (10) strip connecting the cell (100) to an electronic device (30) for monitoring its state of health.

13. The cell according to one of claims 1 to 12, **characterised in that** each electrical connection contact stud (501, 502) also includes a primary shoulder (520) that is designed to be assembled with the power connecting device, and more precisely with an electrically-conducting connecting part (54) and spring elements (70), with a view to being connected to a terminal (901, 902) of an adjacent cell (100), with an intermediate contact part (60) being interposed between the electrically-conducting connecting part (54) and the terminal (901, 902) in order to favour the electrical contact between said parts.
